# EUROPÄISCHE PATENTANMELDUNG

(11) **EP 1 387 147 A1**
(43) Veröffentlichungstag der Anmeldung: **04.02.2004**
(21) Anmeldenummer: 03015252.4
(22) Anmeldetag: 05.07.2003
(51) Int. Cl.: G01D 5/249

(54) **Messsystem zur Absolutwerterfassung von Winkeln oder Wegen**

(30) Priorität: 06.07.2002 DE 10230471
(71) Anmelder: Rodi, Anton, 69181 Leimen (DE)
(72) Erfinder: Rodi, Anton, 69181 Leimen (DE)

(57) **Zusammenfassung**

Es wird ein Messsystem zur Erfassung von Winkeln oder Wegen beschrieben, bei dem der Maßstab eine Messspur mit absoluter Kodierung aufweist, und die von einem Sensor abgetastet wird. Der Maßstab ist aus wenigstens zwei in gleicher Weise absolut kodierten Teilstrecken zusammengesetzt und auf dem Maßstab ist mindestens eine geeignete Spur vorgesehen, mit der der Absolutwert der jeweils erreichten Teilstrecke durch eine weitere Sensoranordnung ermittelt wird. Aus den beiden Absolutwerten wird dann der Gesamtabsolutwert gewonnen. Die mindestens eine geeignete Spur ist wenigstens ein Teil der Messspur selbst, die aus einer Spur bestehen oder aus mehreren Spuren zusammengesetzt sein kann.

## Beschreibung

Die Erfindung betrifft ein Messsystem zur Absolutwerterfassung von Winkeln oder Wegen mit den Merkmalen des Oberbegriffs des Anspruchs 1.

Bei der älteren Patentanmeldung 101 171 93.5 ist als geeignete Messspur eine gesonderte Spur vorgesehen, dort Parallelspur genannt.

Der Erfindung liegt die Aufgabe zugrunde, ein Messsystem mit Absolutwerterfassung zu schaffen, das bei großen Maßstablängen anwendbar ist, dabei keine sehr große Bitzahl in der Maßstabskodierung mit den dadurch bedingten Nachteilen benötigt und gegenüber dem Messsystem des Hauptpatents vereinfacht ist.

Diese Aufgabe wird durch die Merkmale des Anspruchs 1 gelöst. Vorteilhafte Weiterbildungen und Ausgestaltungen ergeben sich aus den Unteransprüchen.

Der erfindungsgemäße Längenmaßstab ist für beliebige Längenmessstrecken kostengünstig fertigbar und problemlos einsetzbar. Der gesamte Abtastsensor ist in seinen Komponenten für die möglichst universelle Anwendung bei Winkel- und Wegmesssystemen geeignet und für beliebige Messlängen einsetzbar. Mit der erfinderischen Ausgestaltung der Längenmesseinrichtung wird den vielfältigen Anforderungen Rechnung getragen und eine universelle und preisgünstige Geräteausführung auch für die verschiedensten Aufgabenstellungen geschaffen.

Der erfinderische Gedanke basiert auf der Nutzung von z. B. 12-Bit-Absolutkodierten-Strecken, die bei optischen Abtastsystemen ca. 100mm Länge aufweisen, und mehrfach aneinandergereiht die Messstabslänge ergeben. Diese Teilabschnitte haben zweckmäßigerweise eine absolut kodierte Spur, die vorzugsweise mit einer parallel verlaufenden Inkrementalspur zur analogen Erfassung der dazwischen liegenden Wegstrecke zusätzlich versehen ist, um einen sehr hoch aufgelösten Gesamtabsolutwert zu bilden. Ein 4m-Maßstab hat ca. 40 solcher gleicher absolutkodierter Strecken, z. B. im PRC-Code, deren jeweilige Anfänge und Enden in der Codeauslegung für die kontinuierliche Signalauswertung berücksichtigt werden. Bei z. B. einem 12-Bit-Code ergeben sich 144 Kodierungsmöglichkeiten, nach denen ein zyklischer Übergang zur nächsten Teilstrecke erfolgen kann.

Um die absolute Lage insgesamt zu bestimmen, ist es notwendig, die "Nummer" des jeweiligen Streckenabschnitts zu erfassen. Dies geschieht beim Hauptpatent und bei diesem Zusatz dadurch, dass die Teilstrecken nach Richtung und Lage erfasst werden und entsprechend von einer definierten Ausgangsposition aus folgerichtig bestimmt werden.

Die Teilstrecken sind auch bei ausgeschalteter Netzversorgung zu erfassen und bedürfen daher eines niederen Energie- bzw. Stromverbrauchs, damit eine hierzu geeignete Hilfsenergie, wie z. B. Batterie, zur Verfügung gestellt werden kann. Alle bisher bekannten Absolutwert-Messsysteme haben einen hierzu viel zu hohen Stromverbrauch von typisch 20 mA bis größer 200 mA, so dass eine Batterie-Hilfsenergie nicht in Frage kommt. Daher wird erfindungsgemäß eine weitere Sensoranordnung mit geeigneter Auswertschaltung vorgeschlagen, die mit möglichst geringem Aufwand und damit Energieverbrauch gestattet, die Streckenabschnitte zählerisch zu erfassen. Diese zusätzliche Sensoranordnung ist in ihrer Ausführung und damit Stromverbrauchs stark von der Art der Erfassung der absolutkodierten Teilstrecken abhängig.

Benutzt man die absolutkodierten Teilstrecken selbst zur Erfassung der Teilstrecken-Abschnitte mit der weiteren Sensoranordnung, so hat das den Vorteil der Nutzung der vorhandenen Maßstabspur. Die vorab beispielhaft mit einem PRC-Code versehenen und mit 12-Bit-absolutkodiert ausgeführten Teilstrecken bieten unterschiedliche Möglichkeiten, mit der weiteren Sensoranordnung die Anzahl der Teilstrecken zu erfassen. Z. B. kann die PRC-Absolutspur selbst benutzt werden, in dem man die in EP 1102040 - bzw. US 09/716,338 - Anmeldung beschriebene Absoluterfassung auf einen einzigen Sensor reduziert und auf die zusätzliche Auswertung der zu interpolierenden Inkrementalspur verzichtet, so dass die hierzu vereinfachte Schaltungsanordnung zur Erfassung der Teilstrecken mit möglichst geringer Hilfsenergie bzw. Batteriestrom auskommt.

Es ist aber auch die vorgehend beschriebene und zweckmäßigerweise zur PRC-Spur parallel verlaufende Inkrementalspur für die sichere Erfassung der Teilstrecken mittels der weiteren Sensoranordnung geeignet. Dazu sind z. B. die bekannt einfachen, zwei um 90°, bzw. (270°) versetzt angebrachten Sensoren zur Erfassung der 360°-Inkrementalteilungstrecke geeignet. Die Inkrementalstrecke wird richtungsabhängig zählerisch erfasst und die so bekannte Länge der Absolutstrecke - z. B. bei 12-Bit-Code entspricht das 4096 Inkrementen - erfasst sowie zur Auswertung des Gesamtabsolutwertes herangezogen.

Es gibt verschiedene Arten, die Absolut-Teilstrecken zu kodieren. Eine einfache Ausführung dafür ist z. B. eine Teilstrecke, die einen Sin-/Cos-Signalverlauf von 360° auf der Gesamtlänge aufweist - z B. durch magnetisierte N-/S-Teilstrecken - und entsprechend hochauflösend von 8 Bit bis 12 Bit und darüber interpolierend aufgeteilt werden kann. So aneinander aufgereihte Absolut-Teilstrecken können ebenfalls einfach z. B. mittels hinlänglich bekannten Auswertschaltungen mit um 90° versetzten zwei Sensoren bei der weiteren Sensoranordnung zur stromsparenden Erfassung der Absolut-Teilstrecken herangezogen werden.

Das Absolut-Messsystem lässt sich aber auch dort vorteilhaft anwenden, wo das Messobjekt selbst zwar keine speziell aufgebrachten Markierungen, aber einen strukturierten Werkstoff oder eine strukturierte Oberfläche aufweist und damit Maßstab mit Messspur beinhaltet. Der strukturierte Werkstoff, bzw. die strukturierte Oberfläche braucht nur im Wirkungsbereich der Sensoren im Anwendungseinsatz vorhanden sein und kann somit nur ein Teil des Messobjektes umfassen, das damit den Maßstab bildet. Bekannt sind Messmethoden, die z. B. über geeignete optische Komponenten mit Lichtstrahlen und Sensoren die determinierten periodischen Signale von z. B. Papier, Stahl- und Kunststoffbändern usw. in Relativbewegung auswerten. Über solche Auswertmethoden geben z. B. die Patentschriften DE 2 163 200 C2 und DE 2 133 942 einen Einblick, wobei Letztere sogar nicht determinierte und statistisch schwankende Messsignale von z. B. bewegten Blechbändern über das Korrelationsverfahren entsprechend auswerten.

Solche Messobjekte sind entweder in ihren Werkstoffeigenschaften selbst geeignet determiniert, z. B. bei Kunststoffen, oder die durch Schleifen, Feinstdrehen usw. bearbeiteten Oberflächen, z. B. bei Kolben weisen die nötigen Strukturen für eine geeignete Messspur zur Auswertung auf. In der Patentschrift DE 3 418 854A1 und DE 3 4 181 190A1 werden bei Lack- und Resistschichten über Ultraschall die gewünschten Strukturen optisch vorstrukturiert und über Ultraschall fest im Werkstoff fixiert, sowie auch mit Ultraschall messtechnisch danach überprüft. Es gibt somit vielfältige physikalische Messmethoden (z. B. elektromagnetische Strahlung, Laserlicht, Schall usw.) um z. B. über die Oberfläche von bewegten Messkörpern als Maßstab mit Messspur entsprechende Messsignale über geeignete Sensoren auszuwerten.

Für jede und in jeglicher Form ausgeführten Absolut-Teilstrecke gibt es mehrere geeignete Methoden und Ausführungen für die weitere Sensoranordnung, um die Anzahl der Teilstrecken mehr oder weniger stromsparend zu erfassen. Je nach gewählter Absolutkodierung sind Grenzen für den geringsten Stromverbrauch dabei gesetzt, die für viele Anwendungen mit begrenzt vorhandener Hilfsenergie kritisch sind. Vor allem bei Anwendungen für geforderten Batterieeinsatz von 5 - 10 Jahren ohne Wiederaufladung ist der hierfür benötigte Strombedarf auf bis zu einige µA zu senken.

Die so konzipierte Absolutwertbildung in den jeweiligen Streckenabschnitten - ganz unabhängig von dem gewählten Verfahren der Absolutwertbildung - wird mittels der zählbaren Erfassung der Strecken durch die Messspurauswertung zum Gesamtabsolutwert für beliebig lange Strecken ergänzt. Die Sensorkomponenten sind einschließlich der Signalverarbeitung im Gesamtsensor untergebracht. Sie sind für eine Vielzahl von Winkel- und Wegmesssystemen gleich und damit vielfältig einsetzbar. Der Maßstab ist in "endloser Länge" herstellbar und davon sind bedarfsgerecht einfach die beliebigen Maßstabslängen abzutrennen. Auch sind die Anschlüsse zum Datenaustausch sowie zur Parametrierung zweckmäßigerweise zu denen der Dreh- und Winkelgeber identisch auszuführen, um die vorteilhafte Durchgängigkeit der Sensorsysteme bei Kundensteuerungen bezüglich Inbetriebnahme, Nutzung und Service zu gewährleisten. Vor allem sind hierzu volldigitale Versionen über SSI-Datenaustausch und Parametrierung vorteilhaft. Besonders Gebersysteme unter Echtzeit-Signalverarbeitung bieten über die parallel abfragbaren SSI-Taktsignale an mehreren Gebern - mit jeweils separater Datenleitung - die redundante Sensorauswertung an und sind auch in einem Längenmesssystem in sehr verschmutzter Umgebung (sowohl am Sensor als auch am Maßstab) anwendbar.

Anhand der Zeichnung wird die Erfindung näher erläutert.

Es zeigen:
- Fig. 1: den Aufbau des Maßstabes
- Fig. 2: den Maßstab mit Sensoren

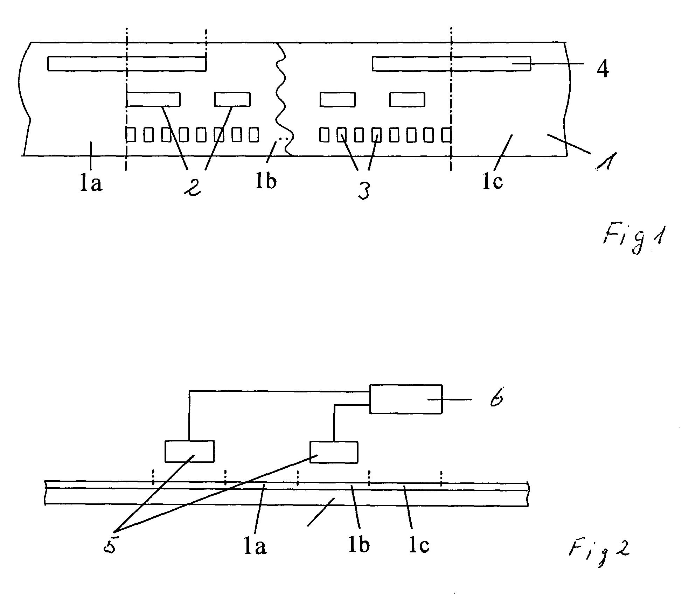

In Fig. 1 ist ein Ausschnitt eines Maßstabs 1 gezeigt, der eine mit Absolutwerten kodierte Spur 2 mit z.B. 12-Bit aufweist. Das bedeutet, dass der dazugehörende Abtastkopf zwölf in Reihe liegende Abtastzellen aufweist, die jeweils nach einer Bewegung um einen Schritt einen neuen Absolutwert erkennen. Es sind hier drei Teilstrecken 1a bis 1c angedeutet, wobei auch die mittlere Teilstrecke 1b nur ausschnittsweise zu sehen ist. In einer Teilstrecke sind 2¹² = 4096 unterscheidbare Schritte, z. B. im PRC-Code vorhanden. Der Gesamtmaßstab ist nun aus mehreren Teilstrecken 1a bis 1c zusammengesetzt. Unter der Spur 2 ist eine Inkrementalspur 3 angeordnet, die dazu dient die Genauigkeit des jeweiligen Werts der Absolutspur 2 zu erhöhen und weist die gleiche Gesamtlänge des Maßstabs auf. Sowohl die Spur 3 und die Spur 2 bilden die absolutkodierten Teilstrecken und sie können jeweils einzeln oder in Kombination durch die weitere Sensoranordnung zur zählerischen Erfassung der Teilstrecken herangezogen werden.

Zu den genannten Spuren kommt bei der eingangs genannten Anmeldung noch eine weitere Spur 4 mit gleicher Länge wie die Teilstrecken, die gemäß der Erfindung entfällt. Diese oder gemäß der Erfindung die Spur 2 und/oder 3 dienen dazu die Teilstrecken nach Richtung und Lage zu erkennen, bzw. zu erfassen und ausgehend von einer definierten Ausgangsposition folgerichtig zu bestimmen. Durch diese Bestimmung wird also die "Nummer" der einzelnen Teilstrecken bestimmt

Die Erfindung soll auch den Fall umfassen, dass eine zur Ermittlung der Nummer der Teilstrecke vorgesehene Kodierung der Messspur überlagert ist, und die zugehörigen Sensoren nur die ihnen zugeordnete Kodierung erfassen.

Fig. 2 zeigt den Maßstab 1 in Seitenansicht mit einer Vielzahl von Teilbereichen, z. B. 1a bis 1c. Es sind zwei versetzt angeordnete Abtastköpfe 5 vorhanden, deren Messergebnisse zu einer redundanten Signalauswertung benutzt und in der Steuerung 6 entsprechend verarbeitet werden.

## Patentansprüche

1. Längenmesssystem zur Absolutwerterfassung von Winkeln und Wegen, bei dem der Maßstab (1) eine Messspur (2, 3) zur Absolutwertbildung aufweist, die von einem dazugehörigen Abtastkopf erfasst wird, bei dem der Maßstab (1) aus wenigstens zwei in gleicher Weise zur Absolutwerterfassung ausgebildeten Teilstrecken (1a bis 1c) zusammengesetzt ist, und bei dem auf dem Maßstab (1) mindestens eine geeignete Spur (2, 3, 4) zur Bestimmung des Absolutwerts der jeweils erreichten Teilstrecke (1a bis 1c) mittels einer weiteren Sensoranordnung vorgesehen ist und bei dem Schaltmittel vorgesehen sind, die aus dem Absolutwert der Teilstrecke (1a bis 1c) und dem ermittelten Absolutwert innerhalb der Teilstrecke (1a bis 1c) den Gesamtabsolutwert zur Weiterverarbeitung zur Verfügung stellen, **dadurch gekennzeichnet, dass** die mindestens eine geeignete Spur wenigstens ein Teil der aus einer oder mehreren Spuren ( 2, 3) zusammengesetzten Messspur ist.

2. Messsystem nach Anspruch 1, **dadurch gekennzeichnet, dass** die jeweiligen Teilstrecken (1a bis 1c) in gleichen Codeabschnitten ausgeführt sind.

3. Messsystem nach Anspruch 1 oder 2, **dadurch gekennzeichnet, dass** zur Notversorgung eine Batteriehilfsenergie außerhalb und/oder innerhalb der weiteren Sensoranordnung vorgesehen ist.

4. Messsystem nach einem der Ansprüche 1 bis 3, **dadurch gekennzeichnet, dass** es aus mindestens zwei gleichen und versetzt angebrachten Abtastköpfe (5) besteht, deren Messwerte von einer externen Steuerung zur redundanten Signalauswertung herangezogen werden.

5. Messsystem nach einem der Ansprüche 1 bis 4, **dadurch gekennzeichnet, dass** das zugrunde liegende Absolutmesssystem auf optischen, magnetischen, induktiven, elektromagnetischen oder kapazitiven Messsystemen oder aus Kombinationen dieser Messsysteme beruht.

6. Messsystem nach einem der Ansprüche 1 bis 5, **dadurch gekennzeichnet**, das der Absolutwert der erreichten Teilstrecke (1a bis 1c) durch folgerichtige Auswertung der überfahrenen Teilstrecken (1a bis 1c) von einer definierten Ausgangsposition aus bestimmt wird.
